# EUROPÄISCHE PATENTANMELDUNG

(11) **EP 1 099 418 A2**
(43) Veröffentlichungstag der Anmeldung: **16.05.2001**
(21) Anmeldenummer: 00124712.1
(22) Anmeldetag: 13.11.2000
(51) Int. Cl.: A61C 13/00

(54) **Halter für ein Modell**

(30) Priorität: 12.11.1999 DE 19954732
(71) Anmelder: Sirona Dental Systems GmbH, 64625 Bensheim (DE)
(72) Erfinder: Hasenzahl, Thomas, 64285 Darmstadt (DE)
(74) Vertreter: Sommer, Peter

(57) **Zusammenfassung**

Halter (1) für ein Modell (2) aus zunächst formbarem und danach im wesentlichen festen Material, wobei der Halter (1) eine dem Modell (2) zugewandte Oberfläche (3) mit Vertiefungen (4) zur Aufnahme des noch verformbaren Materials des Modells (2) aufweist, wobei die Vertiefungen (4) hinterschneidungsfrei ausgebildet sind.

## Beschreibung

### Halter für ein Modell

Die Erfindung betrifft einen Halter für ein Modell aus zunächst formbarem und danach im wesentlichen festem Material, wie es beispielsweise für die Erstellung eines dentalmedizinischen Modells zur Anwendung kommt.

### Stand der Technik

Es ist bekannt, anhand eines Abdrucks einer Zahnreihe oder eines Teils davon ein Modell durch Ausgießen des Abdrucks mit Gips oder einem Modellsilicon zu erstellen, wobei nach dem Aushärten des Modellmaterials das Modell auf einem Halter festgeklebt wird. Als weitere Bearbeitung kommt unter anderem auch die optische Vermessung von Modellen von Zahnreihen zur Verwendung der Messdaten in dentalen CAD/CAM-Verfahren in Frage, wozu die Modelle in einer Maschine zur optischen Vermessung zu befestigen sind. Um eine bestmögliche Behandlung zu gewährleisten ist es wichtig, dass der gesamte Vorgang schnell und einfach durchführbar ist, wobei gleichzeitig einzelne Zähne der abgeformten Zahnreihe zur Betrachtung oder Bearbeitung isoliert werden können und auch wieder in der exakten Lagebeziehung zusammengesetzt werden sollen. Der Erfindung liegt demnach die Aufgabe zugrunde, das Modell in einer geeigneten Weise auf einem Halter zu befestigen.

### Darstellung der Erfindung

Gemäß der Erfindung weist der Halter eine dem Modell zugewandte Oberfläche mit Vertiefungen zur Aufnahme des noch verformbaren Materials des Modells auf, wobei die Vertiefungen hinterschneidungsfrei ausgebildet sind.

Diese Vertiefungen sind so ausgebildet, dass eine Trennung des Halters von dem Modell nach Erhärten des Modellmaterials möglich ist, dass aber ein Zusammendrücken von Halter und Modell dazu führt, dass beide Teile mit gewisser Kraft miteinander verbunden sind. Nach Erhärten des Modells kann dieses aus dem Abdruck genommen werden, wobei das Modell anschließend auch vom Halter abgenommen werden kann. Dadurch lässt sich das Modell in die gewünschte Form bringen oder zerschneiden, wobei die Teile anschließend wieder auf dem Halter platziert werden können.

Falls die Vertiefungen eine längs zur Modellrichtung translationssymetrische Struktur, insbesondere Rillen, aufweisen, kann das Modell auf dem Halter in Längsrichtung verschoben werden und ein bestimmtes Teil des Modells kann dadurch an die zur Weiterbearbeitung geeignete Stelle des Halters gebracht werden. Die Positioniermöglichkeiten werden in Längsrichtung folglich verbessert. Falls die Vertiefungen darüber hinaus Rillen sind, die hintereinander Positioniermöglichkeit weiter erhöht, da ein Modell auf verschiedenen Rillen angeordnet werden kann.

Gemäß einer Weiterbildung weisen die Vertiefungen Seitenwände auf, welche in einem Winkel von kleiner als 10° zu der auf die Oberfläche des Halters bezogenen Senkrechten stehen. Derartig kleine Winkel, die vorteilhafterweise noch kleiner als 7°, insbesondere aber 5° betragen können, vergrößern die Oberfläche des Halters, welche mit dem Modell in Berührung ist. Dadurch werden höhere Haltekräfte als bei einer glatten Oberfläche erzielt. Darüber hinaus bewirkt der kleine Winkel eine Art Selbsthemmung, wodurch das Modell fest aber lösbar auf dem Halter sitzt. Vorteilhafterweise ist die Rauhigkeit der Oberfläche des Halters möglichst gering, um einen Formschluss mit dem Modell zu vermeiden. Das Material des Halters ist hierfür vorzugsweise Kunststoff oder Aluminium. Als Modellmaterial kommt Modell-Silicon, aber auch Gips in Frage.

Um den Halter mit dem Modell besser handhabbar zu machen, weist der Halter auf einer der dem Modell abgewandten Unterseite ein Verbindungsstück auf, welches vorzugsweise zur Befestigung an einer Haltevorrichtung einer Vermessungseinrichtung dient.

Vorteilhafterweise sind die Vertiefungen in Form mehrerer sich über die gesamte Oberseite des Halters erstreckenden Längsrillen vorgesehen, so dass die Positionierbarkeit nicht nur in Längsrichtung, sonder auch quer zum Halter durch Aufstrecken des Modells auf verschiedene Rillen gegeben ist.

Sind die äußeren Rillen gleich breit oder schmäler als die inneren Rillen ausgebildet, so lässt sich das Modell durch Aufstecken auf unterschiedliche Rillen in unterschiedlichen Lagen anordnen, wobei ein Übergreifen der äußeren Stege möglich ist.

### Kurzbeschreibung der Zeichnung

Ein Ausführungsbeispiel der Erfindung ist in der Zeichnung dargestellt. Es zeigt die
- Fig. 1a: einen Halter mit einem davon abgelösten dentaltechnischen Modell, die
- Fig. 1b: den Halter aus Fig. 1a in Seitenansicht, die
- Fig.2a: eine dentaltechnische Modellform in einem Halterahmen mit teilweise eingefülltem Modellmaterial, die
- Fig. 2b: das mittels des in das Modellmaterial eingedrückten Halters herausgelöste Modell, die
- Fig. 3a: das aufgeteilte Modell aus Fig. 2b vor der Befestigung auf dem Halter, die
- Fig. 3b: die aufgeteilten Modellteile nach der Befestigung auf dem Halter, die
- Fig. 4: die Befestigung des Halters auf einer Haltevorrichtung und die
- Fig. 5: die Haltevorrichtung in Seitenansicht.

### Ausführungsbeispiel der Erfindung

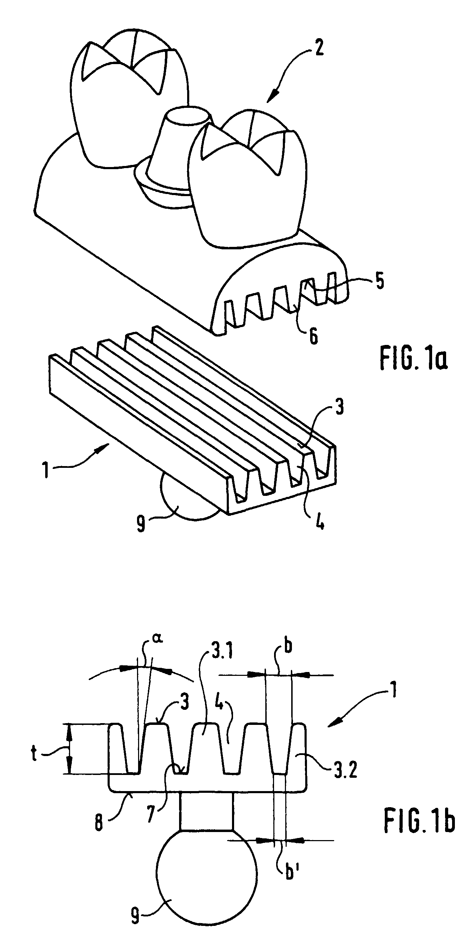

In Fig. 1a ist ein Halter 1 für ein Modell 2 dargestellt. Auf einer dem Modell 2 zugewandten Oberseite 3 sind Vertiefungen 4 in Form von Längsrillen eingearbeitet, die sich über die gesamte Länge des Halters 1 erstrecken und an den Seiten geöffnet sind.

Als Vertiefungen sind grundsätzlich jede Art von Strukturen einsetzbar, welche eine Oberflächenvergrößerung bewirken und vorteilhafterweise dabei so ausgebildet sind, dass sie die Selbsthemmung des Modells an dem Halter ausnützen. So können anstelle der Rillen grundsätzlich auch kegelförmige Vertiefungen vorgesehen werden, die beispielsweise in regelmäßigen Abständen auf dem Halter verteilt sind. Gleichwohl haben Rillen den Vorteil, dass ein Verschieben des Modells stufenlos möglich ist, wohingegen bei in Längsrichtung unterbrochenen Vertiefungen allenfalls eine schrittweise Positionierung möglich ist. Soll allerdings das Modell 2 ortsfest auf dem Halter 1 angeordnet werden, so sind die Vertiefungen als eindeutige Strukturen auszuführen, wozu sich nicht periodisch angeordnete Strukturen besonders eignen. Dies können auch Querrillen mit unterschiedlicher Rillenbreite und/oder Stegbreite sein.

Die Oberseite 3 des Halters weist eine Oberfläche mit einer geringen Rauhigkeit auf, die insbesondere als glatt bezeichnet werden kann, so dass kein Formschluss zwischen der Oberfläche des Halters und dem Modell gegeben ist.

Das Modell 2 weist auf seiner dem Halter 1 zugewandten Unterseite 5 Vorsprünge 6 auf, die im wesentlichen den Vertiefungen 4 des Halters 1 entsprechen.

In Fig. lb ist der Halter 1 einer Seitenansicht auf die in Längsrichtung ausgerichteten Rillen 4 dargestellt. Dabei ist zu erkennen, dass sich die Rillen 4 in den Grund 7 hinein verjüngen, wobei der Winkel a kleiner als 10°, vorzugsweise kleiner als 7° beträgt. Die Tiefe t einer Rille 4 beträgt ein Vielfaches der Breite b bzw. b' der Rille 4, so dass die Oberfläche 3 und die Begrenzungsflächen der Rille 4 ein Vielfaches der Grundrissfläche des Halters 1 bereitstellen.

Es ist weiterhin zu erkennen, dass zwischen zwei Rillen 4 jeweils ein Steg 3.1 angeordnet ist und dass die Begrenzung der äußeren Rillen durch schmale Stege3.2 erfolgt. Übergreift das in Fig. la dargestellte Modell 2 mit den Vorsprüngen 6 auch die Stege 3.2, so kann aufgrund der geometrischen Abmessungen das Modell 2 nur in einer Lage bezogen auf die Querrichtung des Halters auf diesem angeordnet werden, da die Breite der äußeren Stege 3.2 geringer ist als die Breite des benachbarten Stegs und entsprechend auch die Vorsprünge 6 des Modells unterschiedlich ausgebildet sind. Es ist jedoch ohne weiteres möglich, den Halter 1 so auszubilden, dass keine über die äußeren Stege 3.2 hinausragende Vorsprünge 6 entstehen, bzw. die außenliegenden Vorsprünge 6 abzuschneiden, so dass das verbleibende Modell auch in Querrichtung auf dem Halter durch Einbringen in verschiedene Rillen positionierbar ist.

Der Halter 1 ist darüber hinaus auf seiner Unterseite 8 mit einem Kugelkopf 9 versehen, dessen Zweck später erläutert wird.

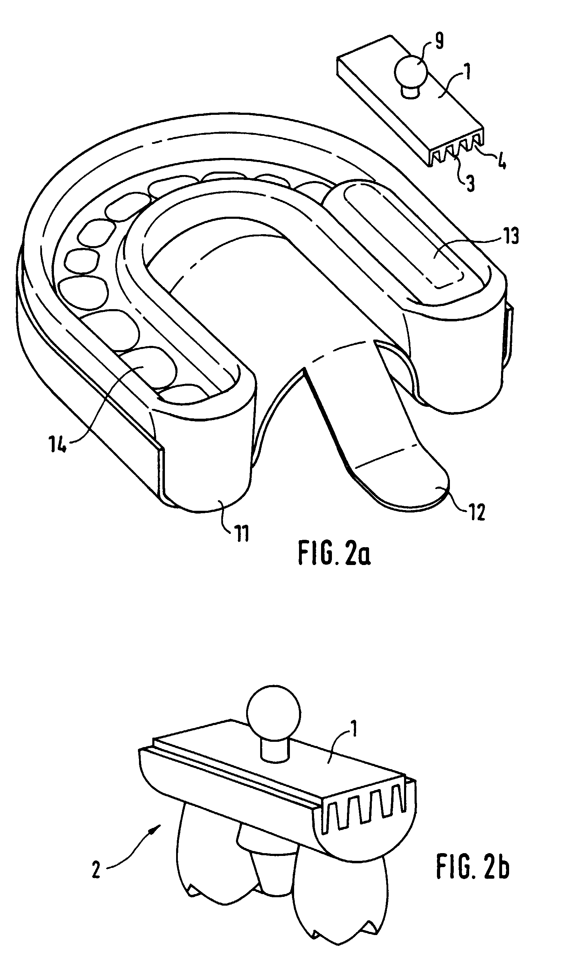

In Fig. 2a ist die Herstellung eines Modells aus einem Abdruck 11 eines Kieferbogens mit einer durchgehenden Zahnreihe dargestellt, wobei der Abdruck 11 in einem Halterahmen 12 befestigt ist. Dieser Abdruck ist auf der rechten Seite der Darstellung mit einem Modellmaterial 13, vorzugsweise Modellsilikon, teilweise ausgefüllt. Das Modellmaterial 13 ist in diesem Verfahrensstadium noch weich, um die den Zahnkonturen entsprechenden Höhlungen 14 auszufüllen und damit möglichst naturgetreu nachzubilden. Der Halter 1 wird mit seiner mit Längsrillen 4 profilierten Oberfläche 3 rückseitig in das noch weiche Modellmaterial 13 eingedrückt, so dass sich die zu den Vertiefungen in Form von Rillen 4 komplementäre Struktur von Vorsprüngen in dem Modellmaterial 13 abbildet.

Diese Struktur ist längs zur Zahnrichtung, also entlang des Kieferbogens translationssymetrisch und quer zur Zahnrichtung in einem Sägezahn- oder Trapezprofil so ausgebildet, dass der Halter aufgrund der Haftung an dem aus dem erhärteten Modellmaterial 13 gebildeten Modell zusammen mit diesem aus dem Abdruck 11 genommen werden kann.

Um die erhärtete Modellmasse 13 aus dem Abdruck 11 herauszunehmen, wird der Abdruck reversibel verformt, um einen eventuellen Formschluss zwischen Modell und Abdruck aufzuheben.

In Fig. 2b das auf dem Halter 1 befestigte Modell 2 nach der Entnahme aus dem Abdruck 14 dargestellt, wobei die Seitenränder bereits sauber abgeschnitten wurden.

Aufgrund der besonderen Struktur der Oberfläche 3 ist es nun möglich, das Modell 2 nach Erhärten des Modellmaterials von dem Halter 1 zu entfernen, was zur der Darstellung nach Fig. 1a führt.

Das von dem Halter 1 entfernte Modell 2 kann nun zum Freilegen der Präparationsgrenzen und des Approximalbereichs geschnitten werden, wobei im Falle der Verwendung von Modellsilikon ein Modellmaterial ein Schneiden ohne Materialverlust möglich ist, so dass die räumliche Zuordnung erhalten bleibt. Falls Gips als Modellmaterial verwendet wird, wird ein Sägeschnitt vorgenommen, der jedoch nicht vollständig ausgeführt wird, so dass Restmaterial verbleibt, welches eine Bruchstelle bildet. Der Bruch des Gipsmodells erfolgt ebenfalls ohne Materialverlust, so dass das Gipsmodell an den Bruchstellen wieder nahtlos unter Rückgewinnung der vorherigen geometrischen Verhältnisse aneinander gesetzt werden kann.

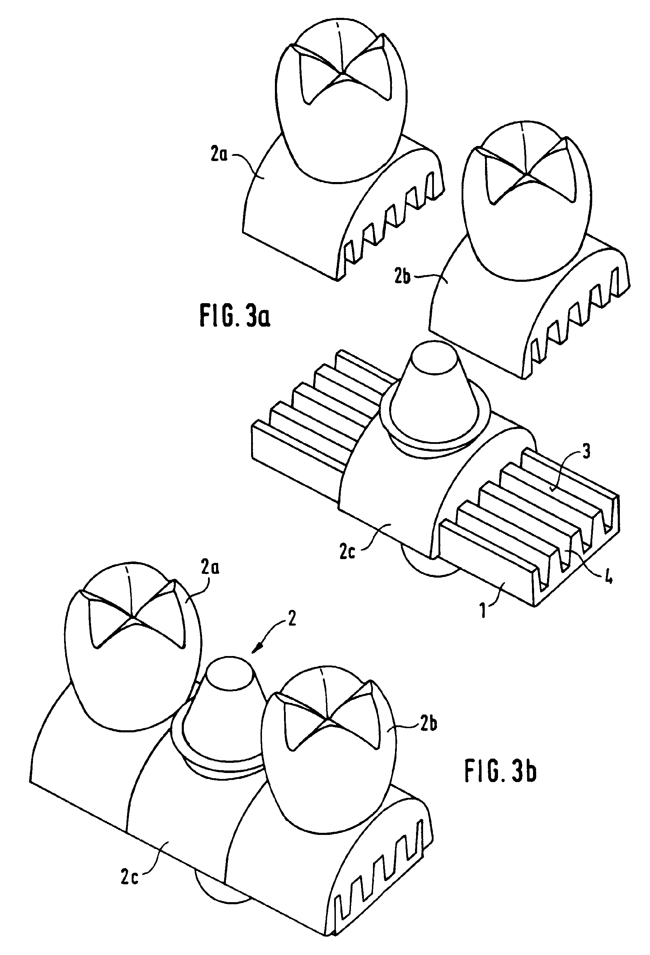

Nach der Bearbeitung des Modells bzw. der Modellteile 2a, 2b, 2c wird das Modell durch Zusammendrücken mit dem Halter 1 verbunden, wobei aufgrund der besonderen Ausgestaltung der Oberfläche 3 des Halters 1 mit den Vertiefungen 4 ein Kraftschluss durch Haftung bewirkt wird. Aufgrund der translationssymetrischen Ausbildung der Rillen 4 lässt sich jedes einzelne Modellteil 2a, 2b, 2c unter gewisser Krafteinwirkung in Längsrichtung verschieben, wodurch eine freie Positionierbarkeit der Modellteile auf dem Halter 1 oder einem mit einer entsprechenden Oberfläche versehenen weiteren, nicht dargestellten Aufnehmer möglich ist, dargestellt in Fig. 3a.

In Fig. 3b ist das aus den Modellteilen 2a, 2b, 2c zusammengesetzte Modell 2 auf dem Halter 1 befestigt, wobei die einander zugewandte Oberseite 3 bzw. Unterseite 5 über die Vertiefungen 4 und Vorsprünge 6 miteinander in Eingriff sind.

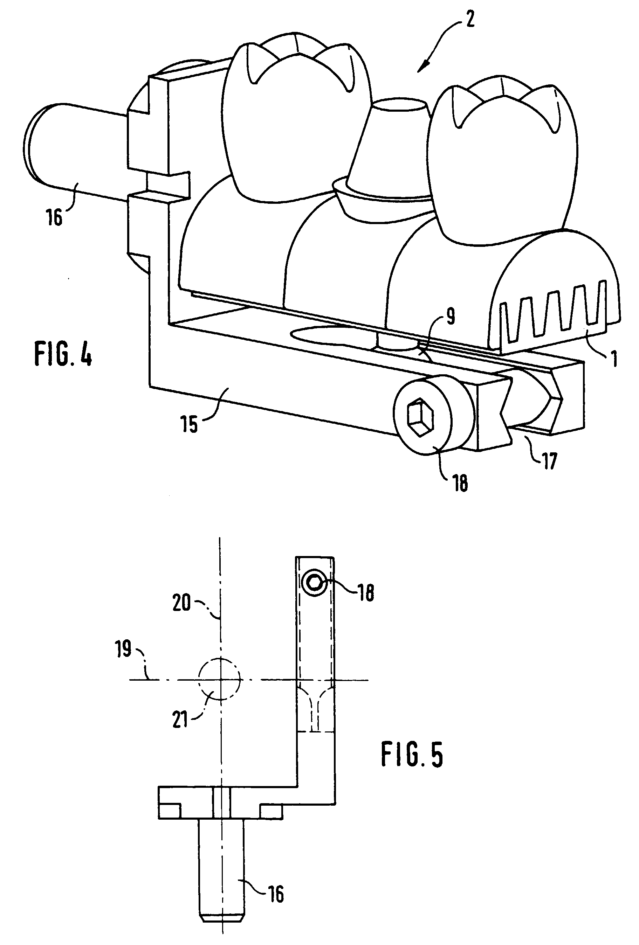

Der mit dem Modell 2 versehene Halter 1 kann nun auf eine Haltevorrichtung 15 montiert werden, welche ihrerseits einen Spannzapfen 16 zum Einspannen in eine nicht dargestellte Spindel einer Vermessungsvorrichtung aufweist, dargestellt in Fig. 4. Dazu ist der Halter 2 mit dem Kugelkopf 9 in einen Schlitz 17 eingeschoben und über ein Verstellmittel in Form einer Schraube 18 innerhalb des Schlitzes 10 verklemmt. Um eine gute Führung des Kugelkopfes 9 innerhalb des Schlitzes 17 zu gewährleisten, sind die Seitenwände des Schlitzes 17 eingeschnitten, wodurch der Kugelkopf 9 mit insgesamt vier Berührungspunkten an den Seitenwänden des Schlitzes 17 zur Anlage kommt. Hierdurch wird eine Festlegung der Lage durch Verschwenken des auf dem Halter 1 angeordneten Modells um den Kugelkopf 9 herum möglich, wenn die Schraube 18 etwas gelockert wird. Ist die endgültige Position erreicht, wird die Schraube 18 festgezogen und der Kugelkopf ist in seiner Lage in dem Schlitz 17 festgelegt. Anstelle einer Schraube 18 kann auch ein Schnellspanner verwendet werden, der das Verspannen des Kugelkopfes 9 in dem Schlitz 17 vereinfacht.

Durch die Verschiebbarkeit des Kugelkopfes 9 in dem Schlitz 17 kann der Kugelkopf 9 auf eine in Fig. 5 dargestellte mittlere Beobachtungsachse 19 gebracht werden, welche zu einer Längsachse 20 des Zapfens 16 senkrecht steht. Die Beobachtungsachse 19 und die Längsachse 20 bilden in ihrem Schnittpunkt ein Zentrum 21 aus, welches von der nicht dargestellten Beobachtungsvorrichtung besonders gut erfasst wird. Die Kippung des Halters 1 ist somit ins Zentrum der Beobachtungseinrichtung gelegt, wodurch ein einfacheres Ausrichten möglich ist.

Anstelle des Kugelkopfes 9 und der Schwalbenschwanznut in den Seitenwänden des Schlitzes 17 können auch andere geometrische Formen verwendet werden, die zu einer Einspannung über mindestens vier definierte Berührungspunkte führen.

In der Regel muss das Modell nur zur Herstellung eines Sägeschnittmodells vom Halter abgenommen werden, wobei das Modell erfahrungsgemäß nur einige wenige Male, in der Regel weniger als fünf Mal vom Halter genommen wird, so dass die Verbindung des Modells mit dem Halter ausreichend fest ist. Dank der Erfindung ist es möglich, dass eine Zahnreihe durch Ansägen oder Brechen oder Schneiden in die einzelnen Zähne zerlegt und mit der exakten vorherigen Lagebeziehung wieder auf dem Halter zusammengesetzt wird. Aufgrund dieser Eigenschaft eignet sich das auf dem Halter angeordnete Modell sowohl zum Einsatz in einer vollautomatischen Vermessungsvorrichtung als auch zur manuellen optischen Ausrichtung mittels eines Beobachtungsgeräts.

Gerade dadurch, dass das Verbindungsstück auf der dem Modell abgewandten Unterseite angeordnet ist, kann der Halter 1 gut in den mit Modellmasse gefüllten Abdruck hineingedrückt werden und anschließend an diesem Verbindungsstück zusammen mit dem Modell aus dem Abdruck herausgenommen werden.

Das Verfahren zur Befestigung des Modells 2 aus zunächst formbarem und danach im wesentlichen festem Material an einem Halter 1 besteht folglich darin, dass der Halter 1 mit einer dem Modell zugewandten, Vertiefungen 4 aufweisenden Oberfläche 3 in das noch verformbare Material des Modells eingedrückt wird, dass das Modell 2 nach der Verfestigung des Materials an dem Halter 1 aus der Modellform 11 entfernt wird und dass das Modell 2 vom Halter 1 genommen und wieder auf den Halter 1 aufgesetzt werden kann und dort mittels der Vertiefungen befestigt ist.

Weiterhin kann das Modell 2 nach dem Entfernen vom Halter 1 in mindestens zwei Teile geteilt werden, um beispielsweise eine weitere Bearbeitung zu ermöglichen.

### Gewerbliche Anwendbarkeit

Der Halter gemäß der Erfindung ist sowohl in Dentallabors wie auch in einer zahnärztlichen Praxis anwendbar.

### Bezugszeichenliste

- 1.: Halter
- 2.: Modell
- 3.: Oberseite
- 4.: Vertiefung
- 5.: Unterseite
- 6.: Vorsprünge
- 7.: Grund
- 8.: Unterseite
- 9.: Kugelkopf
- 10.: ---
- 11.: x Abdruck, Modellform
- 12.: Halterahmen
- 13.: Modellmaterial
- 14.: Höhlungen
- 15.: Haltevorrichtung
- 16.: Spannzapfen
- 17.: Schlitz
- 18.: Verstellmittel, Schraube

## Patentansprüche

1. Halter (1) für ein Modell (2) aus zunächst formbarem und danach im wesentlichen festen Material, dadurch gekennzeichnet, dass der Halter (1) eine dem Modell (2) zugewandte Oberfläche (3) mit Vertiefungen (4) zur Aufnahme des noch verformbaren Materials des Modells (2) aufweist, wobei die Vertiefungen (4) hinterschneidungsfrei ausgebildet sind.

2. Halter (1) nach Anspruch 1, dadurch gekennzeichnet, dass die Vertiefungen (4) eine längs zur Modellrichtung translationssymetrische Struktur, insbesondere Rillen, aufweist.

3. Halter (1) nach Anspruch 1 oder 2, dadurch gekennzeichnet, dass die Vertiefungen (4) Seitenwände aufweisen, welche in einem Winkel von kleiner als 10° zu der auf die Oberfläche (3) des Halters (1) bezogenen Senkrechten stehen.

4. Halter (1) nach einem der Ansprüche 1 bis 3, dadurch gekennzeichnet, dass die Rauhigkeit der Oberfläche des Halters (1) so gering ist, dass ein Formschluss zwischen dem Halter und dem Modell im wesentlichen vermieden wird.

5. Halter (1) nach einem der Ansprüche 1 bis 4, dadurch gekennzeichnet, dass auf einer dem Modell (2) abgewandten Unterseite (5) ein Verbindungsstück, vorzugsweise zur Befestigung an einer Haltevorrichtung (15), vorgesehen ist.

6. Halter (1) nach einem der Ansprüche 1 bis 5, dadurch gekennzeichnet, dass die Vertiefungen (4) in Form mehrerer sich über die gesamte Oberseite (3) des Halters (1) erstreckenden Längsrillen vorgesehen sind.
